# EUROPEAN PATENT APPLICATION

(11) **EP 2 075 669 A1**
(43) Date of publication of application: **01.07.2009**
(21) Application number: 08013263.2
(22) Date of filing: 23.07.2008
(51) Int. Cl.: G06F 3/00

(54) **Method of generating a function output from a photographed image and related mobile computing device**

(30) Priority: 31.12.2007 TW 96151651
(71) Applicant: High Tech Computer Corp. (HTC), Taoyuan County, Taiwan R.O.C. (TW)
(72) Inventor: Lin, Jian-Liang, Taoyuan City Taoyuan County (TW); Wang, John, C., Taoyuan City Taoyuan County (TW)
(74) Representative: Schaeberle, Steffen

(57) **Abstract**

To perform a search, or other function, based on input from a camera in a mobile computing device (50, 200), the camera (202, 504) of the mobile computing device (50, 200) captures an image, an area (212) corresponding to text or another searchable object in the image is selected or determined, the text in the area is recognized to generate a plurality of characters, or a string, the plurality of characters or the object becomes input for the function, and output of the function is displayed in a display (502, 204) of the mobile computing device (50, 200).

## Description

The present invention relates to a method of displaying an output of a function utilized in a mobile computing device and a mobile computing device for displaying an output of a function according to the pre-characterizing claims of claims 1, 3, 5 and 7.

Conventionally, mobile computing devices such as a PDA (Personal Digital Assistant) or a smart phone have a keypad thereon or connected to which. It is very common that a wrong keystroke will be made when typing with keypads, leading to extra keystrokes required to correct the mistake. As mentioned, number pads require extra keystrokes to make up for their limited number of keys. And, when using a stylus, the user's hand may easily tire due to the small size of the stylus, and the fine motions required for the mobile computing device to recognize the text being inputted. Thus, text input in mobile computing devices is currently unable to achieve the speed and accuracy provided by the conventional keyboard.

This in mind, the present invention aims at a method of displaying an output of a function utilized in a mobile computing device and a mobile computing device for displaying an output of a function, thereby gives the user can be given a quick, intuitive method of looking up text or one object on a search engine, in a dictionary, on a map, or in a retailer data comparison application, without having to input the text or text related to the object manually using the cumbersome input devices of the prior art.

This is achieved by a method of displaying an output of a function utilized in a mobile computing device and a mobile computing device for displaying an output of a function according to the pre-characterizing claims of claims 1, 3, 5 and 7. The dependent claims pertain to corresponding further developments and improvements.

As will be seen more clearly from the detailed description following below, the mobile computing device for displaying an output of a function comprises a memory storing digital image data and image search program code, a display for displaying graphical representations of text data and image data, and a processor coupled to the memory and the display for executing the image search program code to select the digital image data, determine a corresponding region of the digital image data, recognize text in the corresponding region to generate at least one string, input the at least one string to the function for generating the output, and control the display to display the output of the function.

As will be seen more clearly from the detailed description following below, the method of generating an output of a function utilized in a mobile computing device comprises selecting an image in the mobile computing device, the mobile computing device recognizing an object in the image to generate an input for the function, and displaying the output of the function generated based on the input in the mobile computing device.

As will be seen more clearly from the detailed description following below, the mobile computing device for generating an output of a function comprises a processor for selecting an image in the mobile computing device, and recognizing an object in the image as an input to the function, and a display coupled to the processor for displaying the output of the function.

In the following, the invention is further illustrated by way of example, taking reference to the accompanying drawings. Thereof
Fig. 1 is a flowchart of a method of displaying an output of a function according to the present invention;
Fig. 2 is a diagram of a mobile computing device photographing text;
Fig. 3 is a diagram of the mobile computing device displaying database search results according to the photographed text;
Fig. 4 is a diagram of a method of generating an output of a function according to the present invention;
Fig. 5 is a function block diagram of the mobile computing device according to the present invention; and
Fig. 6 is a diagram of the mobile computing device photographing an object.

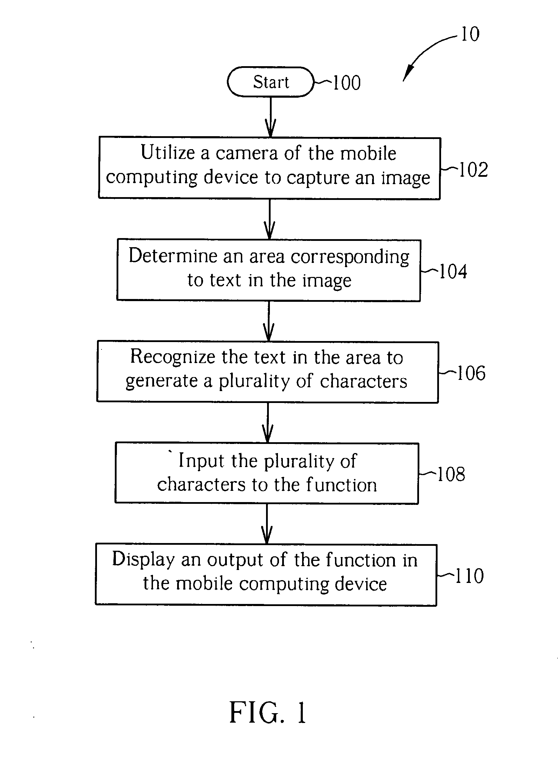

Please refer to Fig. 1, which is a flowchart of a process 10 for displaying an output of a function in a mobile computing device according to the present invention. The process 10 comprises the following steps:
Step 100: Start.
Step 102: Utilize a camera of the mobile computing device to capture an image.
Step 104: Determine an area corresponding to text in the image.
Step 106: Recognize the text in the area to generate a plurality of characters.
Step 108: Input the plurality of characters to the function.
Step 110: Display an output of the function in the mobile computing device.

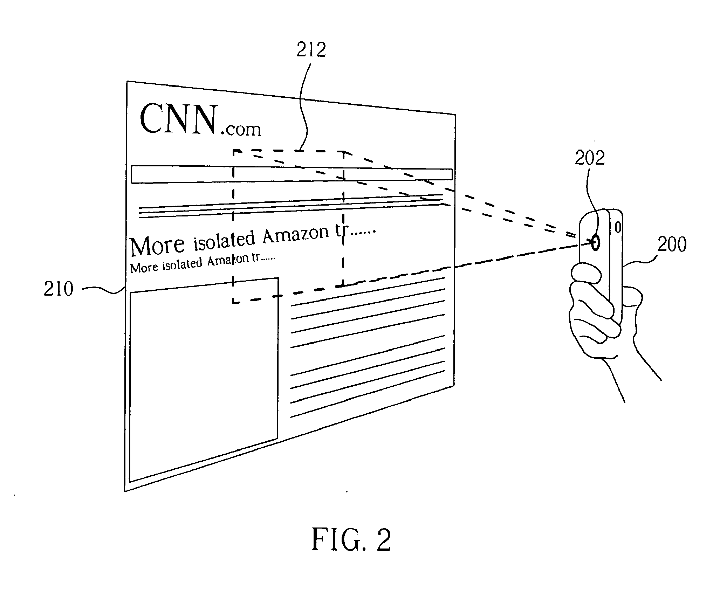

In the present invention, the mobile computing device may utilize a camera device to capture an image (Step 102). Please refer to Fig. 2, which shows a user using a camera device 202 of the mobile computing device 200 to capture an image. The mobile computing device 200 is preferably a smartphone, PDA phone or touch phone, but could also be another networked device with an integrated camera device, such as a PDA or notebook. As shown in Fig. 2, the user may browse a web page 210 (in this case, CNN.com), and the user may utilize the camera device 202 of the mobile computing device 200 to photograph a section 212 of the web page 210. The user may also select a stored image stored as digital image data in a memory of the mobile computing device instead of utilizing the camera device 202 to capture the image. This would allow the user to capture the image first, then perform further processing at a later time. The user could also browse a publication, such as a book, newspaper or magazine, and utilize the camera device 202 of the mobile computing device 200 to photograph a page or region of the publication. The user may be interested in searching for information on an object appearing in the page or region of the publication, something on a front page of the publication, or an advertisement, such as an advertisement for a consumer product. The object may also be an actor/actress, or even a logo.

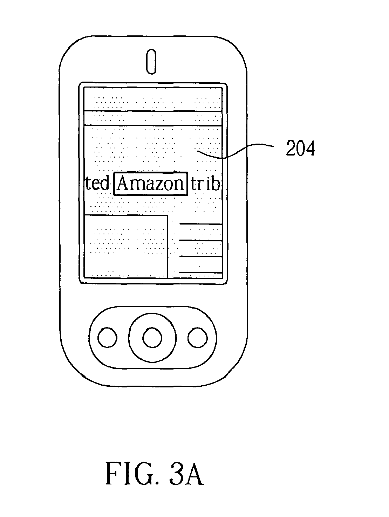

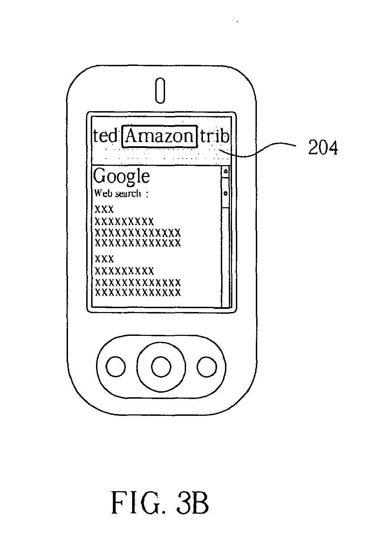

Please refer to Figs. 3A and 3B, which show a display 204 of the mobile computing device 200 as the user selects text in the image for performing a search (Step 104). As shown in Fig. 3A, the user may select the word "Amazon" (Step 104). Then, the word "Amazon" may be converted from pixels in the image to a character string that may be inputted to the Google search engine (Steps 106-108). Results sent back to the mobile computing device 200 from the Google search engine are then displayed in the display 204 of the mobile computing device 200 (Fig. 3B, Step 110). Of course, the function could be one of many online or offline functions, including a search engine, a dictionary, a map, and a retailer data comparison, etc. The Google search engine is used as an example, and any Google search function, Yahoo! search function, or other database search function may be utilized as the function in the present invention. Database comparison functions may also be utilized as the function in the present invention.

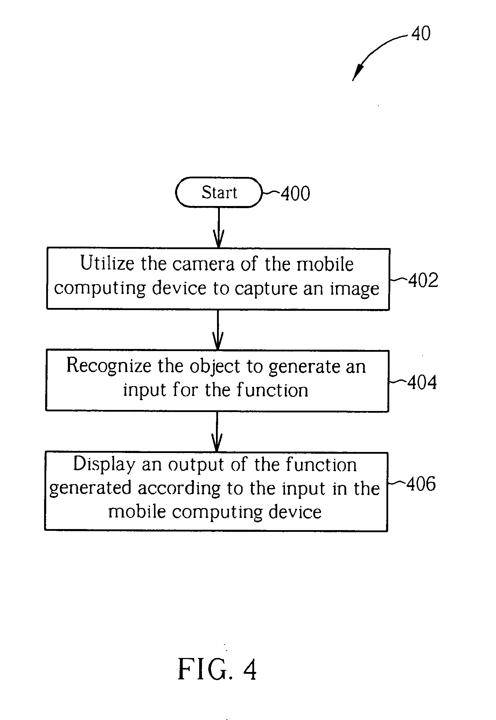

Please refer to Fig. 4, which is a diagram of a process 40 according to a second embodiment of the method of displaying the output of the function. The process 40 comprises the following steps:
Step 400: Start.
Step 402: Utilize the camera of the mobile computing device to capture an image.
Step 404: Recognize the object to generate an input for the function.
Step 406: Display an output of the function generated according to the input in the mobile computing device.

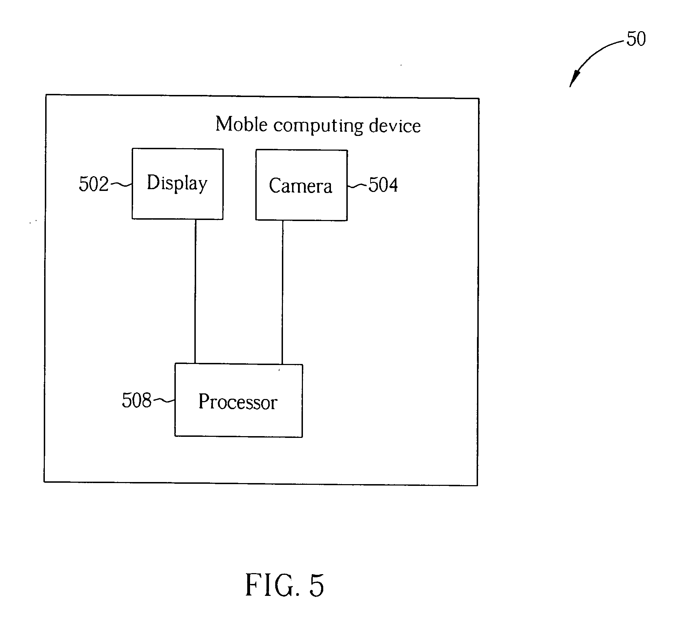

Please refer to Fig. 5, which is a diagram of a mobile computing device 50 according to the present invention. The mobile computing device 50 can be seen as the mobile computing device 200 in the above description, and comprises a display 502, a camera 504, and a processor 408 coupled to the display 502 and the camera 504. The memory may include the digital image data, such as the image mentioned above. The above-mentioned process 10 or the process 40 may also be stored in the memory as image search program code, which the processor 508 may execute for selecting the digital image data, determining the corresponding region of the digital image data, recognizing the text in the corresponding region to generate the at least one string, inputting the at least one string to the function for generating the output, and controlling the display 502 to display the output of the function. The camera 504, or camera device, may be utilized to capture the image mentioned above, and store the image in the memory as the digital image data. The display may be utilized for displaying graphical representations of text data or image data, such as the digital image data mentioned above, e.g. by manipulating light to display a plurality of display pixels having different chroma and luminance levels.

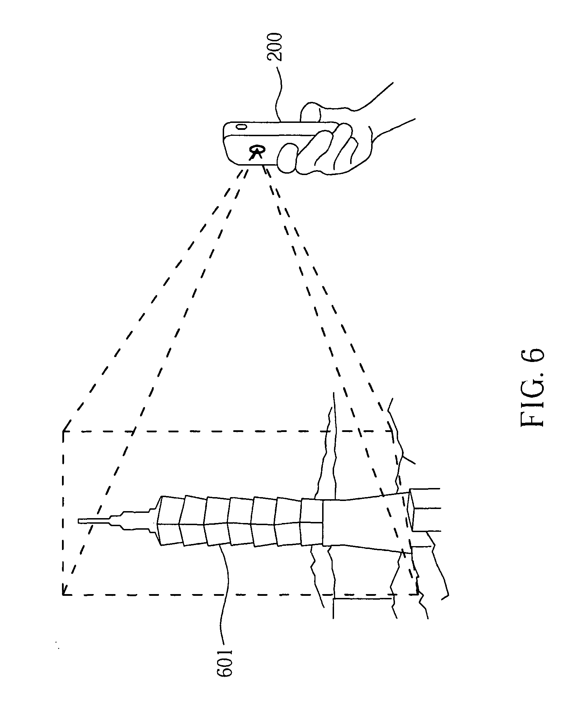

In the second embodiment of the present invention, the mobile computing device may use the camera 504 to capture an image (Step 502). Please refer to Fig. 6, which shows a user using the mobile computing device 50 to capture an image. As shown in Fig. 6, for example, the user may photograph an object 601, such as the Taipei 101 Building. Based on an image of the Taipei 101 Building captured by the mobile computing device 50, the mobile computing device may then perform a search to find information about the Taipei 101 Building. The user may be interested in searching for information on other objects appearing in the publication, e.g. something on a front page of the publication, or an advertisement, such as an advertisement for a consumer product. The object 601 may also be a representation of an actor/actress, or even a logo. In other words, the present invention does not place any limitations on type of the object 601 or image source. The object 601 could even be a physical object, such as a plant, animal, or car that the user photographs with the camera 504 of the mobile computing device 50. Once the object 601 is captured in digital image data, and recognized by the mobile computing device 50, a database search or comparison function may be utilized as the function to gain more information about the object 601. For example, the Google search engine may be used as the function. Or, any other Google search function, Yahoo! search function, or other database search function may be utilized as the function of the present invention as well. If the function is available for access on a remote server, such as the Google search function, the mobile computing device 50 may further comprise a network interface, such as a wired network interface or a wireless network interface, for sending the input to the function through a network and/or receiving the output of the function through the network. A Wi-Fi, HSDPA, WIMAX, or a GPRS communications protocol may also be utilized as the network interface.

Compared to the prior art, the present invention allows a user to photograph an image with text or an object, and the mobile computing device recognizes the text or the object within the image (or within a selected area of the image). The user can then select desired text from the image using the input device of the mobile computing device, and the mobile computing device can then input the desired text or the object to a desired function. The output of the desired function is then displayed on the mobile computing device. This gives the user a quick, intuitive method of looking up text or one object on a search engine, in a dictionary, on a map, or in a retailer data comparison application, without having to input the text or text related to the object manually using the cumbersome input devices of the prior art.

For completeness, various aspects of the invention are described in the following numbered clauses:
Clause 1: A method of displaying an output of a function utilized in a mobile computing device comprising:
   selecting an image in the mobile computing device;
   determining an area corresponding to text in the image;
   the mobile computing device recognizing text in the image to generate a plurality of characters;
   the mobile computing device inputting the plurality of characters to the function; and
   displaying the output of the function in the mobile computing device.
Clause 2: The method of Clause 1, wherein the image is a camera image captured by a camera device of the mobile computing device.
Clause 3: The method of Clause 1 further comprising the mobile computing device sending the plurality of characters to the function through a network or the mobile computing device receiving the output of the function through the network.
Clause 4. The method of Clause 1, wherein the function is a database search function.
Clause 5. The method of Clause3, wherein the database search function is a Google search function, a Yahoo! search function, or a dictionary search function.
Clause 6. The method of Clause 1, wherein the function is a data comparison function.
Clause 7. The method of Clause1, wherein the mobile computing device is a smart phone, a PDA, a PDA phone, or a touch phone.
Clause 8. A mobile computing device for displaying an output of a function, the mobile computing device comprising:
   a memory storing digital image data and search program code;
   a display for displaying graphical representations of text data and image data; and
   a processor coupled to the memory and the display for executing the search program code to select the digital image data, determine a corresponding region of the digital image data, recognize text in the corresponding region to generate at least one string, input the at least one string to the function for generating the output, and control the display to display the output of the function.
Clause 9. The mobile computing device of Clause 7, further comprising a camera device coupled to the processor for capturing a digital image for storage as the digital image data.
Clause 10. The mobile computing device of Clause 7, further comprising a network interface coupled to the processor for sending the at least one string to the function or receiving the output of the function through a data connection established between the network interface and a server.
Clause 11. The mobile computing device of Clause 7, wherein the function is a database search function.
Clause 12. The mobile computing device of Clause 10, wherein the database search function is a Google search function, a Yahoo! search function, or a dictionary search function.
Clause 13. The mobile computing device of Clause 7, wherein the function is a data comparison function.
Clause 14. A method of generating an output of a function utilized in a mobile computing device comprising:
   selecting an image in the mobile computing device;
   the mobile computing device recognizing an object in the image to generate an input for the function; and
   displaying the output of the function generated based on the input in the mobile computing device.
Clause 15. The method of Clause 13, wherein the image is a camera image captured by a camera device of the mobile computing device.
Clause 16. The method of Clause 13, further comprising the mobile computing device sending the input to the function through a network or the mobile computing device receiving the output of the function through the network.
Clause 17. The method of Clause 13, wherein the function is a database search function.
Clause 18. The method of Clause16, wherein the database search function is a Google search function, a Yahoo! search function, or a dictionary search function.
Clause 19. The method of Clause13, wherein the function is a data comparison function.
Clause 20. A mobile computing device for generating an output of a function, the mobile computing device comprising:
   a processor for selecting an image in the mobile computing device, and recognizing an object in the image as an input to the function; and
   a display coupled to the processor for displaying the output of the function.
Clause 21. The mobile computing device of Clause 19, further comprising a camera device for capturing the image.
Clause 22. The mobile computing device of Clause 19, further comprising a network interface for sending the input to the function through a network, or for receiving the output of the function through the network.
Clause 23. The mobile computing device of Clause 19, wherein the function is a database search function.
Clause 24. The mobile computing device of Clause 22, wherein the database search function is a Google search function, a Yahoo! search function, or a dictionary search function.
Clause 25. The mobile computing device of Clause 19, wherein the function is a data comparison function.

All combinations and sub-combinations of the above-described features also belong to the invention.

## Claims

1. A method of displaying an output of a function utilized in a mobile computing device (50, 200) comprising:
selecting an image in the mobile computing device (50, 200); **characterized by;**
determining an area (212) corresponding to text in the image;
the mobile computing device (50, 200) recognizing text in the image to generate a plurality of characters;
the mobile computing device (50, 200) inputting the plurality of characters to the function; and
displaying the output of the function in the mobile computing device (50, 200).

2. The method of claim 1 further comprising the mobile computing device (50, 200) sending the plurality of characters to the function through a network or the mobile computing device (50, 200) receiving the output of the function through the network.

3. A mobile computing device (50, 200) for displaying an output of a function, the mobile computing device comprising:
a memory storing digital image data and search program code;
a display (204, 502) for displaying graphical representations of text data and image data; and
**characterized by;**
a processor (508) coupled to the memory and the display (204, 502) for executing the search program code to select the digital image data, determine a corresponding region of the digital image data, recognize text in the corresponding region to generate at least one string, input the at least one string to the function for generating the output, and control the display to display the output of the function.

4. The mobile computing device (50, 200) of claim 3, further comprising a network interface coupled to the processor (508) for sending the at least one string to the function or receiving the output of the function through a data connection established between the network interface and a server.

5. A method of generating an output of a function utilized in a mobile computing device (50, 200) comprising:
selecting an image in the mobile computing device (50, 200); **characterized by;**
the mobile computing device (50, 200) recognizing an object in the image to generate an input for the function; and
displaying the output of the function generated based on the input in the mobile computing device (50, 200).

6. The method of claim 5, further comprising the mobile computing device (50, 200) sending the input to the function through a network or the mobile computing device (50, 200) receiving the output of the function through the network.

7. A mobile computing device (50, 200) for generating an output of a function, the mobile computing device (50, 200) comprising:
**characterized by;**
a processor (508) for selecting an image in the mobile computing device, and recognizing an object in the image as an input to the function; and
a display (502, 204) coupled to the processor for displaying the output of the function.

8. The mobile computing device (50, 200) of claim 7, further comprising a network interface for sending the input to the function through a network, or for receiving the output of the function through the network.

9. The method of claim 1 and 5, **characterized in that** the image is a camera (202, 504) image captured by a camera device of the mobile computing device.

10. The mobile computing device (50, 200) of claims 3 and 7, further comprising a camera device (202, 504) coupled to the processor (508) for capturing a digital image for storage as the digital image data.

11. The method of claims 1 and 5, **characterized in that** the function is one of a database search function and a data comparison function.

12. The mobile computing device (50, 200) of claims 3, and 7
**characterized in that** the function is one of a database search function and a data comparison function.
